# EUROPEAN PATENT SPECIFICATION

(11) **EP 1 593 015 B1**
(45) Date of publication and mention of the grant of the patent: **30.05.2018**
(21) Application number: 03815713.7
(22) Date of filing: 03.02.2003
(51) Int. Cl.: G06F 21/10

(54) **ARCHITECTURE FOR ENCRYPTED APPLICATION INSTALLATION**
ARCHITEKTUR FÜR DIE INSTALLATION EINER VERSCHLÜSSELTEN ANWENDUNG
ARCHITECTURE POUR INSTALLATION D'APPLICATION CRYPTÉE

(43) Date of publication of application: 09.11.2005
(73) Proprietor: Nokia Technologies Oy, 02610 Espoo (FI)
(72) Inventor: PAATERO, Lauri, Fin-00970 Helsinki (FI)
(74) Representative: Ruuskanen, Juha-Pekka
(86) International application number: PCT/IB2003/000343
(87) International publication number: WO 2004/070587

(56) References cited:
- EP-A- 1 217 850
- WO-A-02/44995
- US-A1- 2002 031 225
- US-A1- 2002 099 940
- US-A1- 2003 163 685

## Description

### Technical Field of the Invention

The present invention relates to methods for providing, and systems arranged to provide, an application to be executed on a device, the device being arranged with a secure environment to which access is strictly controlled by a device processor.

### Background Art

Various electronic devices, such as mobile telecommunication terminals, portable computers and PDAs require access to security related components such as application programs, cryptographical keys, cryptographical key data material, intermediate cryptographical calculation results, passwords, authentication of externally downloaded data etc. It is often necessary that these components, and the processing of them, is kept secret within the electronic device. Ideally, they shall be known by as few people as possible. This is due to the fact that a device, for example a mobile terminal, could possibly be tampered with if these components are known. Access to these types of components might aid an attacker with the malicious intent to manipulate a terminal.

Therefore, a secure execution environment is introduced in which environment a processor within the electronic device is able to access the security related components. Access to the secure execution environment, processing in it and exit from it should be carefully controlled. Prior art hardware comprising this secure environment is often enclosed within a tamper resistant packaging. It should not be possible to probe or perform measurements and tests on this type of hardware which could result in the revealing of security related components and the processing of them.

Providers of application programs encrypt the programs so as to create tamper resistant software. Only when the application program code is executed in a secure environment, the code is decrypted and managed as plain text.

David Lie et al, "Architectural Support for Copy and Tamper Resistant Software", published in Proceedings of the 9th International Conference on Architectural Support for Programming Languages and Operating Systems (ASPLOS-IX), November, 2000, Pp 169-177 discloses a system called XOM, eXecute Only Memory. Every XOM processor has a public/private key pair, and the private key is kept in hardware and known only to the processor, not to the owner of the processor or anyone else. When XOM software is purchased, the software undergoes encryption, by means of this public/private key pair. The executable code is decrypted by the processor just before execution and the plaintext code never leaves the processor chip. A problem with this type of architecture is that the application providers have very limited possibilities to define the way the application is handled during application installation.

### Summary of the Invention

It is an object of the present invention to mitigate the above stated problem, as well as providing a system which facilitates modifications in key management and encryption systems.

This object is achieved by methods for providing an application to be executed on a device, the device being arranged with a secure environment to which access is strictly controlled by a device processor, according to claim 1 and systems arranged to provide an application to be executed on a device, the device being arranged with a secure environment to which access is strictly controlled by a device processor, according to claim 5. According to a first aspect of the invention, there is provided a method for providing an application to be executed on a device, the device being arranged with a secure environment to which access is strictly controlled by a device processor, the method comprising providing the device with an application having a non-encrypted installation part and a protected part; wherein the protected part is encrypted; providing, via a secure channel into the secure environment, the device with a first key for decrypting said protected part, said secure channel being established by the installation part; decrypting, in the secure environment, said protected part into executable form by means of said first key; re-encrypting, in said secure environment, the executable form by means of a second key to provide an encrypted part; and storing, outside said secure environment, the encrypted part, wherein the second key forms a part of the protected part, the second key thereby being extracted when the protected part is decrypted in the secure environment.

The first key may be encrypted in the secure environment by means of a second key and the encrypted key may be then stored outside the secure environment.

The second key may be symmetric.

The multiple keys may be able to be transferred successively on the secure channel into the secure environment, each key being used to decrypt a corresponding encrypted application in the secure environment.

According to a second aspect of the invention, a system is provided, the system being arranged to provide an application to be executed on a device, the device being arranged with a secure environment to which access is controlled by a device processor, the system comprising: means for providing the device with an encrypted application having a non-encrypted installation part and a protected part; wherein the protected part is encrypted; means for providing, via a secure channel into the secure environment, the device with a first key for decrypting said protected part, said secure channel being established by the installation part; means for decrypting, in the secure environment, said protected part into executable form by means of said first key; means for re-encrypting, in said secure environment, the executable form by means of a second key to provide an encrypted part; and means for storing, outside said secure environment, the re-encrypted application encrypted part, wherein the second key forms a part of the protected part, the second key thereby being extracted when the encrypted application is decrypted in the secure environment.

The means may be arranged to encrypt the first key in the secure environment using a second key and the encrypted key is then stored outside the secure environment.

The invention is based on the idea that an application is downloaded to a device which is arranged to execute the application. The invention is also based on the following ideas.

The application is divided into an installation part that establishes proper set up of the application and a protected part which is to be executed in the secure environment. The installation part produces an encrypted application, i.e. the protected part, and keys for decrypting it. The installation part might be encrypted using some arrangement known in the prior art. In this phase of the application installation, the downloaded data is held in a part of the device having milder security requirements than the secure environment. This part is hereinafter referred to as the unsecure environment. When the application is downloaded into the device, the installation part establishes a secure channel with a server that, on the secure channel, provides a first key into the secure environment of the device, with which first key it is possible to decrypt the encrypted application. It might be necessary for the device to authenticate itself in order to receive the first key. When the encrypted application is to be executed, it is loaded into the secure environment and decrypted by the first key. The application is now in plain text and can be executed. When there is no desire to execute the application, it is re-encrypted by means of a second key and stored outside the secure environment, i.e. in the unsecure environment. An advantage with this inventive idea is that the application provider has the freedom to control the decryption of the application software. Since it is performed in the secure environment, the owner of the device, the device being e.g. a mobile phone, is unable to access the application and thereby copy, read or manipulate it. Moreover, the application provider handles the installation of the encrypted application and the key for decrypting the application, and is thus given the possibility to handle the encryption/decryption schemes and the key management. The only part that has to stay fixed is the loading part of the application, i.e. the part of the application which loads data into the secure environment and handles the decryption of the encrypted application. A further advantage is that the application can be re-encrypted in the secure environment by a second key and stored outside the secure environment. When the application is not executed, it is not stored in the secure environment. Secure environment memory is relatively expensive compared to unsecure environment memory located. As soon as the application is to be executed again, the re-encrypted application is loaded into the secure environment and decrypted by means of the second key.

According to an example of the invention, the first key is encrypted in the secure environment by means of the second key. The encrypted first key is then stored outside the secure environment. This example has the advantage that the first key can be used in future downloads of applications. All that has to be done is to encrypt the first key in the secure environment with the second key and store the encrypted first key outside the secure environment. The first key can then be used to decrypt a downloaded encrypted application in the secure environment. This is done by loading the encrypted first key into the secure environment and decrypting it with the second key. This means that the installation step, including setting up a secure channel, of the first key need not be employed. This is particularly useful in production and/or in the development phase, wherein a large number of applications might be downloaded to the device in a rather short time.

According to another example of the present invention, the second key is symmetric and derived from the application in such a way that the second key is comprised in the application itself and extracted when the application is loaded into the secure environment and decrypted by the first key. This has the advantage that the application provider is given the freedom to decide which key to be used in the encryption/decryption relating to the second key. The second key management can then be controlled by the application provider. The fact that the second key is symmetric implies that the encryption/decryption using the second key will be less computationally demanding compared to if it had been asymmetric.

According to yet another example of the present invention, the second key is symmetric and derived from the application using an application seed. By using an application seed in the form of, for example, an application serial number, it is possible to create the second key. The serial number is encrypted by means of an appropriate algorithm in the secure environment using a device generated static key, and this operation creates the symmetric second key. This example has the advantage that the second key must not be distributed, but it can be generated rather easy in the secure environment.

Further features of, and advantages with, the present invention will become apparent when studying the appended claims and the following description. The invention is defined only by the scope of the appended claims.

### Brief Description of the Drawings

The present invention will be described in greater detail with reference to the following drawings, wherein:
Fig. 1 shows a block scheme of a device architecture for providing data security in which device the present invention advantageously can be applied;
Fig. 2 shows a block scheme of how the encrypted application is loaded into the secure environment and decrypted into plain text, i.e. into executable form, according to an example of the invention; and
Fig. 3 shows how the symmetric second key is derived from the application according to an example of the invention.

### Description of Preferred Examples of the Invention

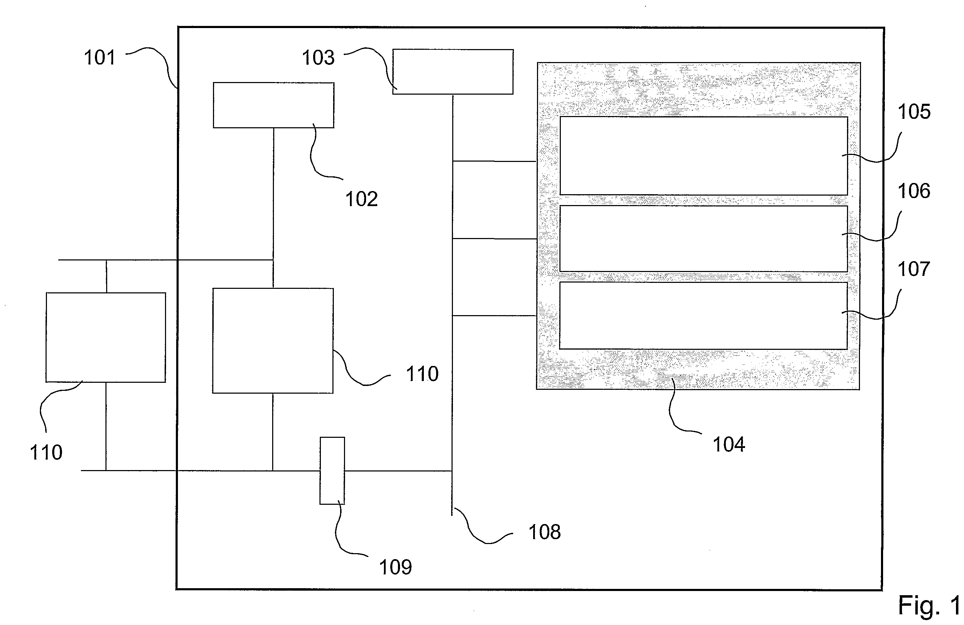

A device architecture for providing data security is shown in Fig. 1. Such a system is further disclosed in the Applicant's international patent application with publication number WO2004015553 A1. The device is implemented in the form of an ASIC (Application Specific Integrated Circuit) 101. The processing part of the architecture contains a CPU 103 and a digital signal processor (DSP) 102.

The secure environment 104 comprises a ROM 105 from which the ASIC 101 is booted. This ROM 105 contains boot application software and an operating system. Certain application programs residing in the secure environment 104 has precedence over other application programs. In a mobile telecommunication terminal, in which the ASIC 101 can be arranged, a boot software should exist, which software includes the main functionality of the terminal. It is not possible to boot the terminal to normal operating mode without this software. This has the advantage that by controlling this boot software, it is also possible to control the initial activation of each terminal.

The secure environment 104 also comprises RAM 106 for storage of data and applications. The RAM 106 preferably stores so called protected applications, which are smaller size applications for performing security critical operations inside the secure environment 104. Normally, the way to employ protected applications is to let "normal" applications request services from a certain protected application. New protected applications can be downloaded into the secure environment 104 at any time, which would not be the case if they would reside in ROM. Secure environment 104 software controls the download and execution of protected applications. Only signed protected applications are allowed to run. The protected applications can access any resources in the secure environment 104 and they can also communicate with normal applications for the provision of security services.

In the secure environment 104, a fuse memory 107 is comprised containing a unique random number that is generated and programmed into the ASIC 101 during manufacturing. This random number is used as the identity of a specific ASIC 101 and is further employed to derive keys for cryptographic operations. The architecture further comprises a standard bridge circuit 109 for limitation of data visibility on the bus 108. The architecture should be enclosed within a tamper resistant packaging. It should not be possible to probe or perform measurements and tests on this type of hardware which could result in the revealing of security related components and the processing of them. The DSP 102 has access to other peripherals 110 such as a direct memory access (DMA) unit, RAMs, flash memories and additional processors can be provided outside the ASIC 101.

By providing the above described architecture in which the CPU 103 is operable in two different modes, one secure operating mode and one unsecure operating mode, the CPU 103 of the device 101 can be enabled to execute non-verified software downloaded into the device 101. This is due to the fact that only verified software has access to the secure environment 104. This allows testing, debugging and servicing of the mobile telecommunication terminal and its software without risking that a third party is given access to information which makes it possible to manipulate the security related components of the device 101 so as to affect the security functions when in the secure environment 104.

In the secure mode, the processor 103 has access to security related data located within the secure environment 104. The security data include cryptographical keys and algorithms, software for booting the circuitry, secret data such as random numbers used as cryptographical key material, application programs etc. The device 101 can advantageously be used in mobile telecommunication terminals, but also in other electronic devices such as computers, PDAs or other devices with need for data protection. The access to these security data and the processing of them need to be restricted, since an intruder with access to security data could manipulate the terminal. When testing and/or debugging the terminal, access to security information is not allowed. For this reason, the processor 103 is placed in the unsecure operating mode, in which mode it is no longer given access to the protected data within the secure environment 104.

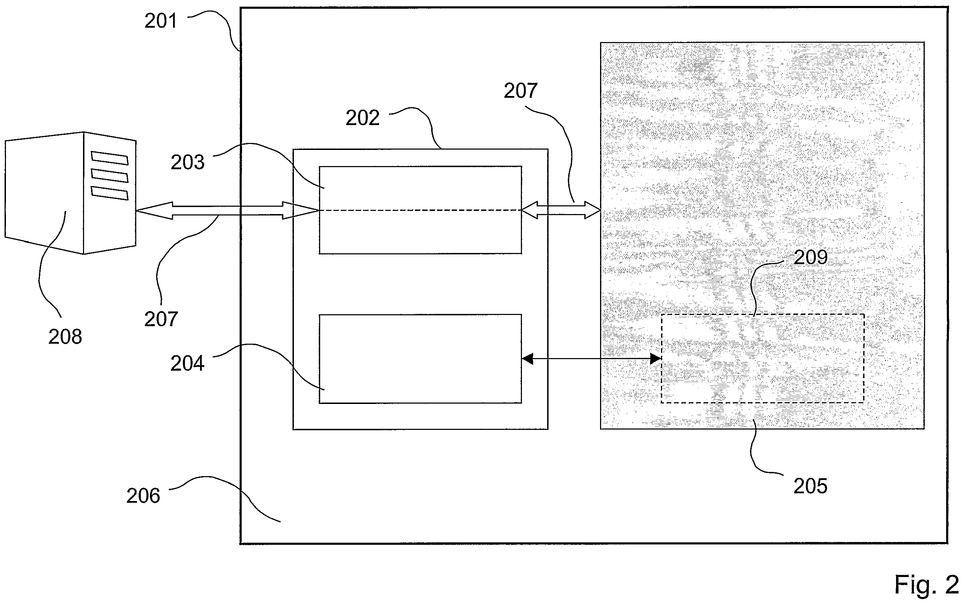

Fig. 2 shows a block scheme of how the encrypted application is loaded into the secure environment and decrypted into plain text, i.e. into executable form. First, an application 202 is loaded 211 into a device 201 which is arranged to execute the application 202. The application 202 is divided into an installation part 203 that establishes proper set up of the application 202 and a protected part 204 which is to be executed in the secure environment 205. The installation part 203 produces an encrypted application, i.e. the protected part 204, and keys for decrypting it. The installation part 203 is not encrypted. At this stage of the installation, the application 202 is held in the unsecure environment 206. When the application 202 is loaded into the device 201, the installation part 203 establishes a secure channel 207 with a server 208 that, on the secure channel 207, provides a first key into the secure environment 205 of the device 201, with which first key it is possible to decrypt the encrypted application 204. The secure channel 207 can be created in a number of different ways. It is, for example, possible to encrypt the first key at the server 208 by using the public key of the device 201. It is decrypted with the private key of the device 201 in the secure environment 205. Thus, a secure channel is provided. It is also possible to use the SSL protocol to transfer the first key into the secure environment 205. The key issue is that the first key is encrypted in such a way that a third party is unable to eavesdrop on the channel 207 and catch a plain text version of the first key. When the encrypted application 204 is to be executed, it is loaded into the secure environment 205 and decrypted by the first key. The protected application is now in plain text 209 and can be executed. When there is no desire to execute the plain text application 209 in the secure environment 205, it is re-encrypted by means of a second key and stored in the unsecure environment 206.

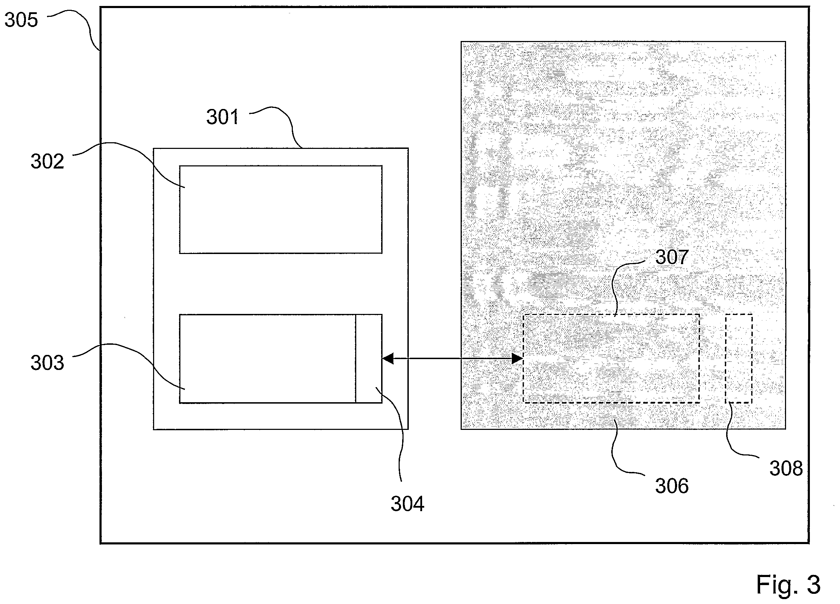

The second key is symmetric and can be derived from the application in different ways. Referring to Fig. 3, which shows the application 301 that is downloaded to the device 305, including the installation part 302 and the protected application part (also referred to herein as the encrypted application) 303. The second key is denoted by 304 and is attached to the application code itself. Note that the second key forms part of the protected application 303 and is consequently also encrypted by means of the first key. The second key is extracted when the protected application 303 is loaded into the secure environment 306 and decrypted by the first key. The application 307 as well as the second key 308 is then in plain text. The second key can also be derived from the application using an application seed. By using an application seed in the form of, for example, an application serial number, it is possible to create the second key. The serial number is encrypted by means of an appropriate algorithm in the secure environment using a device generated static key, and this operation creates the symmetric second key. This operation is called diversification.

Referring again to Fig. 2, according to an example of the invention, the first key is encrypted in the secure environment 205 by means of the second key. The encrypted first key is then stored in the unsecure environment 206. This example has the advantage that the first key can be used in future downloads of applications 202. All that has to be done is to encrypt the first key in the secure environment 205 with the second key and store the encrypted first key in the unsecure environment 206. The first key can then be used to decrypt a downloaded encrypted application 204 in the secure environment 205. This is done by loading the encrypted first key into the secure environment 205 and decrypting it with the second key. The protected application 204 is then decrypted with the first key. This means that the installation step, including setting up a secure channel 207, of the first key need not be employed. This is particularly useful in production and/or in the development phase, wherein a large number of applications 202 might be downloaded to the device 201 in a rather short time. In production and/or in the development phase, it is also advantageous to transfer multiple keys successively on the secure channel into the secure environment, since each key later can be used to decrypt an encrypted application that corresponds to that key the in the secure environment.

It should be noted that the above mentioned embodiments exemplify the invention, and that those skilled in the art will be able to design many alternative embodiments without departing from the scope of the appended claims. The word "comprising" does not exclude the presence of elements or steps other than those listed in a claim. The word "a" or "an" preceding an element does not exclude the presence of a plurality of such elements. In the device claims enumerating several means, several of these means can be embodied by one and the same item of hardware.

## Claims

1. A method for providing an application to be executed on a device, the device being arranged with a secure environment to which access is strictly controlled by a device processor, the method comprising:
providing the device (201) with an application (202) having a non-encrypted installation part (203) and a protected part (204);
wherein the protected part (204) is encrypted;
providing, via a secure channel (207) into the secure environment (205), the device (201) with a first key for decrypting said protected part (204), said secure channel being established by the installation part ; decrypting, in the secure environment (205), said protected part (204) into executable form (209) by means of said first key;
re-encrypting, in said secure environment, the executable form (209) by means of a second key to provide an encrypted part; and
storing, outside said secure environment, the encrypted part,
wherein the second key (304) forms a part of the protected part (303), the second key thereby being extracted when the protected part (303) is decrypted in the secure environment (306).

2. The method according to claim 1, the method comprising:
encrypting, in said secure environment (205), said first key by means of the second key; and
storing, outside said secure environment (205), the encrypted first key.

3. The method according to claim 1 or 2, wherein said second key is symmetric.

4. The method according to any of the previous claims, wherein multiple keys can be transferred successively on the secure channel into the secure environment, each key being used to decrypt a corresponding encrypted application in the secure environment.

5. A system arranged to provide an application to be executed on a device, the device being arranged with a secure environment to which access is controlled by a device processor, the system comprising:
means for providing the device (201) with an application (202) having a non-encrypted installation part (203) and a protected part (204);
wherein the protected part (204) is encrypted;
means for providing, via a secure channel (207) into the secure environment (205), the device (201) with a first key for decrypting said protected part (204), said secure channel being established by the installation part ;
means for decrypting, in the secure environment (205), said protected part (204) into executable form (209) by means of said first key;
means for re-encrypting, in said secure environment, the executable form (209) by means of a second key to provide an encrypted part;
means for storing, outside said secure environment, the encrypted part,
wherein the second key (304) forms a part of the protected part (303), the second key thereby being extracted when the encrypted application (303) is decrypted in the secure environment (306).

6. The system according to claim 5, the system comprising:
means for encrypting, in said secure environment (205), said first key by means of the second key; and
means for storing, outside said secure environment (205), the encrypted first key.

7. The system according to claim 5 or 6, wherein said second key is symmetric.

8. The system according to claim 7, wherein said second key is comprised in the application (202) itself.

9. The system according to claim 7, wherein said second key is generated in the secure environment (205) using an application seed.

10. The system according to any of the claims 5-9, wherein the system is arranged such that multiple keys can be transferred successively on the secure channel into the secure environment, each key being used to decrypt a corresponding encrypted application in the secure environment.

## Patentansprüche

1. Verfahren zum Vorsehen einer Anwendung, die auf einem Gerät auszuführen ist, wobei das Gerät mit einer sicheren Umgebung eingerichtet ist, auf die ein Zugriff streng durch einen Geräteprozessor gesteuert wird, wobei das Verfahren umfasst:
Versehen des Geräts (201) mit einer Anwendung (202), die einen unverschlüsselten Installationsteil (203) und einen geschützten Teil (204) aufweist;
wobei der geschützte Teil (204) verschlüsselt ist;
Versehen, über einen sicheren Kanal (207) in die sichere Umgebung (205), des Geräts (201) mit einem ersten Schlüssel zum Entschlüsseln des geschützten Teils (204), wobei der sichere Kanal durch den Installationsteil eingerichtet wird;
Entschlüsseln des geschützten Teils (204) in der sicheren Umgebung (205) in eine ausführbare Form (209) mittels des ersten Schlüssels;
erneutes Verschlüsseln, in der sicheren Umgebung, der ausführbaren Form (209) mittels eines zweiten Schlüssels, um einen verschlüsselten Teil vorzusehen; und
Speichern, außerhalb der sicheren Umgebung, des verschlüsselten Teils,
wobei der zweite Schlüssel (304) einen Teil des geschützten Teils (303) bildet, wobei, wenn der geschützte Teil (303) in der sicheren Umgebung (306) entschlüsselt wird, der zweite Schlüssel dabei extrahiert wird.

2. Verfahren nach Anspruch 1, wobei das Verfahren umfasst:
Verschlüsseln, in der sicheren Umgebung (205), des ersten Schlüssels mittels des zweiten Schlüssels; und
Speichern, außerhalb der sicheren Umgebung (205), des verschlüsselten ersten Schlüssels.

3. Verfahren nach Anspruch 1 oder 2, wobei der zweite Schlüssel symmetrisch ist.

4. Verfahren nach einem der vorhergehenden Ansprüche, wobei mehrere Schlüssel nacheinander auf dem sicheren Kanal in die sichere Umgebung übertragen werden können, wobei jeder Schlüssel zum Entschlüsseln einer entsprechenden verschlüsselten Anwendung in der sicheren Umgebung verwendet wird.

5. System, das eingerichtet ist, um eine auf einem Gerät auszuführende Anwendung vorzusehen, wobei das Gerät mit einer sicheren Umgebung eingerichtet ist, auf die der Zugriff durch einen Geräteprozessor gesteuert wird, wobei das System umfasst:
Mittel zum Versehen des Geräts (201) mit einer Anwendung (202), die einen unverschlüsselten Installationsteil (203) und einen geschützten Teil (204) aufweist;
wobei der geschützte Teil (204) verschlüsselt ist;
Mittel zum Versehen, über einen sicheren Kanal (207) in die sichere Umgebung (205), des Geräts (201) mit einem ersten Schlüssel zum Entschlüsseln des geschützten Teils (204), wobei der sichere Kanal durch den Installationsteil eingerichtet wird;
Mittel zum Entschlüsseln, in der sicheren Umgebung (205), des geschützten Teils (204) in eine ausführbare Form (209) mittels des ersten Schlüssels;
Mittel zum erneuten Verschlüsseln, in der sicheren Umgebung, der ausführbaren Form (209) mittels eines zweiten Schlüssels, um einen verschlüsselten Teil vorzusehen;
Mittel zum Speichern, außerhalb der sicheren Umgebung, des verschlüsselten Teils,
wobei der zweite Schlüssel (304) einen Teil des geschützten Teils (303) bildet, wobei, wenn die verschlüsselte Anwendung (303) in der sicheren Umgebung (306) entschlüsselt wird, der zweite Schlüssel dabei extrahiert wird.

6. System nach Anspruch 5, wobei das System umfasst:
Mittel zum Verschlüsseln, in der sicheren Umgebung (205), des ersten Schlüssels mittels des zweiten Schlüssels; und
Mittel zum Speichern, außerhalb der sicheren Umgebung (205), des verschlüsselten ersten Schlüssels.

7. System nach Anspruch 5 oder 6, wobei der zweite Schlüssel symmetrisch ist.

8. System nach Anspruch 7, wobei der zweite Schlüssel in der Anwendung (202) selbst enthalten ist.

9. System nach Anspruch 7, wobei der zweite Schlüssel in der sicheren Umgebung (205) unter Verwendung eines Anwendungsstartwerts erzeugt wird.

10. System nach einem der Ansprüche 5 bis 9, wobei das System so eingerichtet ist, dass mehrere Schlüssel nacheinander auf dem sicheren Kanal in die sichere Umgebung übertragen werden können, wobei jeder Schlüssel zum Entschlüsseln einer entsprechenden verschlüsselten Anwendung in der sicheren Umgebung verwendet wird.

## Revendications

1. Procédé de fourniture d'une application à exécuter sur un dispositif, le dispositif étant agencé avec un environnement sécurisé auquel un accès est strictement régulé par un processeur de dispositif, le procédé comprenant :
la fourniture au dispositif (201) d'une application (202) ayant une partie d'installation non chiffrée (203) et une partie protégée (204) ;
dans lequel la partie protégée (204) est chiffrée ;
la fourniture, via un canal sécurisé (207) dans l'environnement sécurisé (205), au dispositif (201) d'une première clé pour déchiffrer ladite partie protégée (204), ledit canal sécurisé étant établi par la partie d'installation ;
le déchiffrement, dans l'environnement sécurisé (205), de ladite partie protégée (204) en forme exécutable (209) au moyen de ladite première clé ;
le chiffrement à nouveau, dans ledit environnement sécurisé, de la forme exécutable (209) au moyen d'une seconde clé pour fournir une partie chiffrée ; et
le stockage, à l'extérieur dudit environnement sécurisé, de la partie chiffrée,
dans lequel la seconde clé (304) fait partie de la partie protégée (303), la seconde clé étant ainsi extraite lorsque la partie protégée (303) est déchiffrée dans l'environnement sécurisé (306).

2. Procédé selon la revendication 1, le procédé comprenant :
le chiffrement, dans ledit environnement sécurisé (205), de ladite première clé au moyen de la seconde clé ; et
le stockage, à l'extérieur dudit environnement sécurisé (205), de la première clé chiffrée.

3. Procédé selon la revendication 1 ou 2, dans lequel ladite seconde clé est symétrique.

4. Procédé selon l'une quelconque des revendications précédentes, dans lequel de multiples clés peuvent être transférées successivement sur le canal sécurisé dans l'environnement sécurisé, chaque clé étant utilisée pour déchiffrer une application chiffrée correspondante dans l'environnement sécurisé.

5. Système agencé pour fournir une application à exécuter sur un dispositif, le dispositif étant agencé avec un environnement sécurisé auquel un accès est régulé par un processeur de dispositif, le système comprenant :
un moyen pour fournir au dispositif (201) une application (202) ayant une partie d'installation non chiffrée (203) et une partie protégée (204) ;
dans lequel la partie protégée (204) est chiffrée ;
un moyen pour fournir, via un canal sécurisé (207) dans l'environnement sécurisé (205), au dispositif (201) une première clé pour déchiffrer ladite partie protégée (204), ledit canal sécurisé étant établi par la partie d'installation ;
un moyen pour déchiffrer, dans l'environnement sécurisé (205), ladite partie protégée (204) en forme exécutable (209) au moyen de ladite première clé ;
un moyen pour chiffrer à nouveau, dans ledit environnement sécurisé, la forme exécutable (209) au moyen d'une seconde clé pour fournir une partie chiffrée ;
un moyen pour stocker, à l'extérieur dudit environnement sécurisé, la partie chiffrée,
dans lequel la seconde clé (304) fait partie de la partie protégée (303), la seconde clé étant ainsi extraite lorsque l'application chiffrée (303) est déchiffrée dans l'environnement sécurisé (306).

6. Système selon la revendication 5, le système comprenant :
un moyen pour chiffrer, dans ledit environnement sécurisé (205), ladite première clé au moyen de la seconde clé ; et
un moyen pour stocker, à l'extérieur dudit environnement sécurisé (205), la première clé chiffrée.

7. Système selon la revendication 5 ou 6, dans lequel ladite seconde clé est symétrique.

8. Système selon la revendication 7, dans lequel ladite seconde clé est comprise dans l'application (202) elle-même.

9. Système selon la revendication 7, dans lequel ladite seconde clé est générée dans l'environnement sécurisé (205) à l'aide d'un germe d'application.

10. Système selon l'une quelconque des revendications 5 à 9, dans lequel le système est agencé de sorte que de multiples clés puissent être transférées successivement sur le canal sécurisé dans l'environnement sécurisé, chaque clé étant utilisée pour déchiffrer une application chiffrée correspondante dans l'environnement sécurisé.
